# EUROPEAN PATENT APPLICATION

(11) **EP 3 059 001 A1**
(43) Date of publication of application: **24.08.2016**
(21) Application number: 14854842.3
(22) Date of filing: 30.09.2014
(51) Int. Cl.: B01D 53/18, B01D 53/50, B01D 53/77

(54) **GAS ABSORPTION COLUMN, METHOD FOR PRODUCING GAS ABSORPTION COLUMN, AND MARINE VESSEL**

(30) Priority: 17.10.2013 JP 2013216325
(71) Applicant: Fuji Electric Co., Ltd., Kawasaki-shi, Kanagawa 210-9530 (JP)
(72) Inventor: TANAKA, Yasuhito, Kawasaki-shi Kanagawa 210-9530 (JP); TAKAHASHI, Kuniyuki, Kawasaki-shi Kanagawa 210-9530 (JP)
(74) Representative: Appelt, Christian W.
(86) International application number: PCT/JP2014/076089
(87) International publication number: WO 2015/056562

(57) **Abstract**

Provided is a gas absorption tower capable of preventing damage during an assembly operation thereof, simplifying the assembly operation and improving efficiency thereof. A gas absorption tower (10) for performing gas absorption by bringing a gaseous matter and fluid into contact with each other has: an introducing portion (20) into which the gaseous matter and the fluid are introduced from the outside; an absorbing portion (21) for performing gas absorption by bringing the gaseous matter and the fluid, which are supplied from the introducing portion, into contact with each other; and a discharge portion (24) for discharging the gaseous matter, subjected to the gas absorption, to the outside. The absorbing portion has a cylindrical piping component (11) in which is formed an internal space to which the gaseous matter is supplied, and a spray device (12) for spraying the fluid to the gaseous matter in the internal space. The cylindrical piping component is divided into a plurality of parts in the central axis direction thereof. The cylindrical piping component includes a lower cylinder (31) and an upper cylinder (32) that configure a cylinder when assembled. The lower cylinder (31) and the upper cylinder (32) are each formed to have a shape obtained by cutting a cylindrical body along the central axis direction thereof.

## Description

### TECHNICAL FIELD

The present invention relates to a gas absorption tower for treating exhaust gas, a method for manufacturing the gas absorption tower, and a vessel.

### BACKGROUND ART

Cyclone scrubbers have been known as gas absorption towers for treating exhaust gas. In a cyclone scrubber, gas enters from the bottom of a cylindrical tower in a tangential direction, swirls upward therein and is brought into contact with fluid that is sprayed in a tower radial direction from a diffusion tube disposed perpendicular to the central axis of the tower and having a plurality of holes. In this manner, gas absorption and dust collection are performed (see Patent Literature 1, for example).

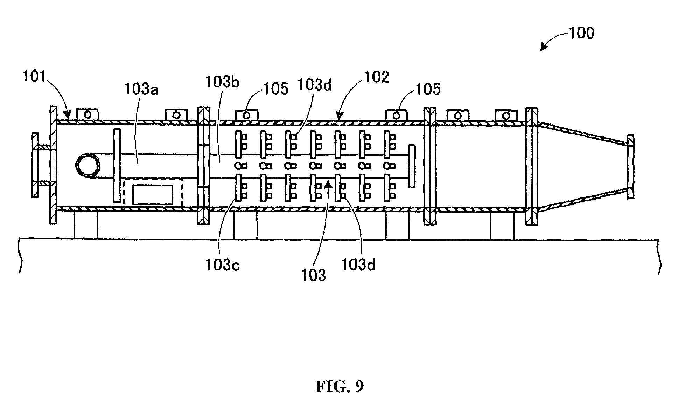

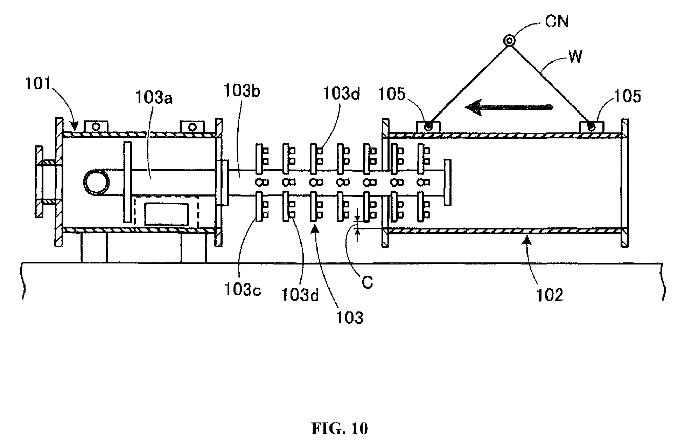

The structures shown in Figs. 9 and 10 are proposed as this type of gas absorption tower. Fig. 9 is a schematic cross-sectional diagram of the conventional gas absorption tower. Fig. 10 is an explanatory diagram illustrating the gist of how to assemble the conventional gas absorption tower. As shown in Fig. 9, the gas absorption tower 100 has a cylindrical main body 101 to which is connected a duct for introducing exhaust gas, and an outer cylinder 102 positioned on the same central axis as the main body 101. A spray device 103 for spraying fluid with which the exhaust gas comes into contact is disposed inside the main body 101 and outer cylinder 102. A plurality of hoisting portions 105 with holes are located in a plurality of sections on the outer circumference of the outer cylinder 102. As shown in Fig. 10, wires W are attached to the hoisting portions 105, so that the outer cylinder 102 can be hoisted with a crane CN or the like.

The spray device 103 has a water pipe 103a that is incorporated in the main body 101, a discharge pipe 103b coupled to the water pipe 103a and located on the central axis of the outer cylinder 102, and a plurality of stages of branch pipes 103c coupled to the discharge pipe 103b. The branch pipes 103c extend in the radial direction of the outer cylinder 102 and are provided with spray nozzles 103d respectively along this extending direction.

When assembling the main body 101 and the outer cylinder 102, first the water pipe 103a is mounted in the main body 101 to couple the spray device 103 and the main body 101 to each other, as shown in Fig. 10. Next, after attaching the wires W to the hoisting portions 105 of the outer cylinder 102, the outer cylinder 102 is hoisted with the crane CN using the wires W. Thereafter, the crane CN is driven to move the outer cylinder 102, and the discharge pipe 103b and branch pipes 103c are inserted into the outer cylinder 102 in the central axis direction (lateral direction).

Patent Literature 1: Japanese Patent No. 3073972

### DISCLOSURE OF THE INVENTION

However, when assembling the gas absorption tower 100 shown in Fig. 10, the outer cylinder 102 wobbles when inserting the spray device 103 into the outer cylinder 102, because the outer cylinder 102 is hoisted with the crane CN. Therefore, the inner circumferential surface or end of the outer cylinder 102 comes into contact with the edges of the branch pipes 103c, resulting in damage to these parts. On the other hand, in order to avoid such contact, the crane CN and the like need to be operated with caution, requiring a longer time to insert the spray device 103 into the outer cylinder 102 and consequently lowering the efficiency of the assembly operation.

When treating a large amount of exhaust gas, the distance in which the exhaust gas comes into contact with the water to be sprayed from the spray nozzles 103d needs to be long. In this case, the outer cylinder 102 and the discharge pipe 103b need to be made longer, increasing the risk that the outer cylinder 102 and the branch pipes 103c come into contact with each other. In order to increase the amount of exhaust gas to be treated, the spray nozzles 103d need to spray the water over a wider range, raising the need to make the branch pipes 103c longer. However, the longer the branch pipes 103c are, the narrower the clearance C between the inner circumferential of the outer cylinder 102 and the branch pipes 103c, again increasing the risk that the outer cylinder 102 and the branch pipes 103c come into contact with each other.

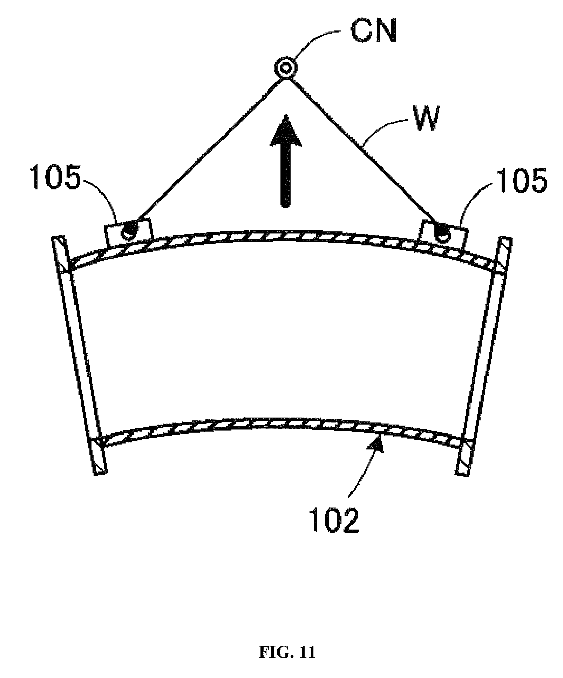

In addition, if the outer cylinder 102 is thin, the outer shape of the outer cylinder 102 deforms as shown in Fig. 11 when hoisted with the crane CN. On the other hand, increasing the thickness of the outer cylinder 102 can enhance its strength to endure the hoisting operation, but it leads to an increase in the cost of materials for the parts.

The present invention was contrived in view of these problems, and an object thereof is to provide a gas absorption tower which is capable of preventing damage during an assembly operation, simplifying the assembly operation, and improving efficiency thereof, a method for manufacturing the gas absorption tower, and a vessel.

Another object of the present invention is to provide a gas absorption tower, a method for manufacturing the gas absorption tower, and a vessel, which are capable of cost reduction.

The present invention is a gas absorption tower for performing gas absorption by bringing a gaseous matter and fluid into contact with each other, the gas absorption tower having: an introducing portion into which the gaseous matter and the fluid are introduced from the outside; an absorbing portion for performing gas absorption by bringing the gaseous matter and the fluid, which are supplied from the introducing portion, into contact with each other; and a discharge portion for discharging the gaseous matter, subjected to the gas absorption, to the outside, wherein the absorbing portion has a cylindrical piping component in which is formed an internal space to which the gaseous matter is supplied from the introducing portion, and a spray device for spraying the fluid to the gaseous matter in the internal space, the cylindrical piping component being divided into a plurality of parts in a central axis direction thereof.

The present invention is also a method for manufacturing a gas absorption tower for performing gas absorption by bringing a gaseous matter and fluid into contact with each other, the method having the steps of: fixing a first molded element of a cylindrical piping component to a main body, the cylindrical piping component having the first molded element and a second molded element which are each formed to have a shape obtained by cutting a cylindrical body along a central axis direction thereof and which configure an internal space into which the gaseous matter is introduced; fixing a spray device, which sprays the fluid in the internal space, to the main body so as to be positioned inside the first molded element; and disposing the second molded element above the first molded element so as to cover the spray device and fixing the second molded element to the main body and the first molded element.

The present invention can provide a gas absorption tower capable of preventing damage during an assembly operation thereof, simplifying the assembly operation and improving efficiency thereof.

### BRIEF DESCRIPTION OF THE DRAWINGS

Fig. 1 is a front view showing the exterior of a gas absorption tower according to an embodiment;
Fig. 2 is a plan view showing the exterior of the gas absorption tower;
Fig. 3 is an explanatory diagram illustrating the internal structure of the gas absorption tower, showing a cross section of a partial configuration of Fig. 1;
Fig. 4 is an explanatory diagram illustrating the internal structure of the gas absorption tower, showing a cross section of a partial configuration of Fig. 2;
Fig. 5A is a cross-sectional diagram of a cylindrical piping component;
Fig. 5B is an exploded view of Fig. 5A;
Fig. 6 is a schematic exploded view of the cylindrical piping component;
Fig. 7 is an explanatory diagram illustrating the gist of how to assemble a discharge pipe of the gas absorption tower;
Fig. 8 is an explanatory diagram illustrating the gist of how to assemble an upper cylinder of the gas absorption tower;
Fig. 9 is an explanatory diagram similar to that of Fig. 3, showing a conventional gas absorption tower;
Fig. 10 is an explanatory diagram illustrating the gist of how to assemble an outer cylinder of the conventional gas absorption tower; and
Fig. 11 is an explanatory diagram illustrating the problems of the conventional gas absorption tower.

### BEST MODE FOR CARRYING OUT THE INVENTION

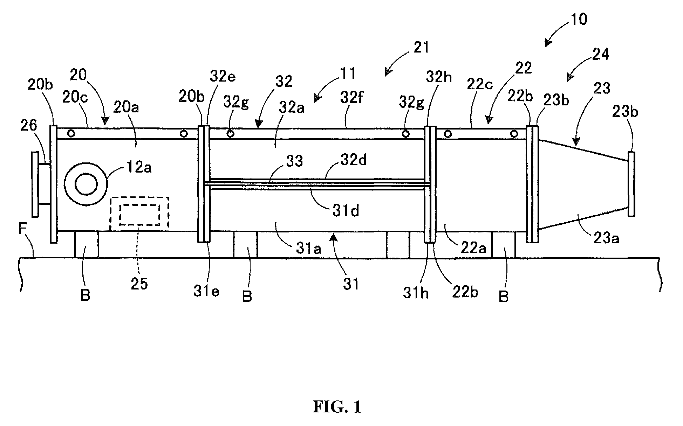

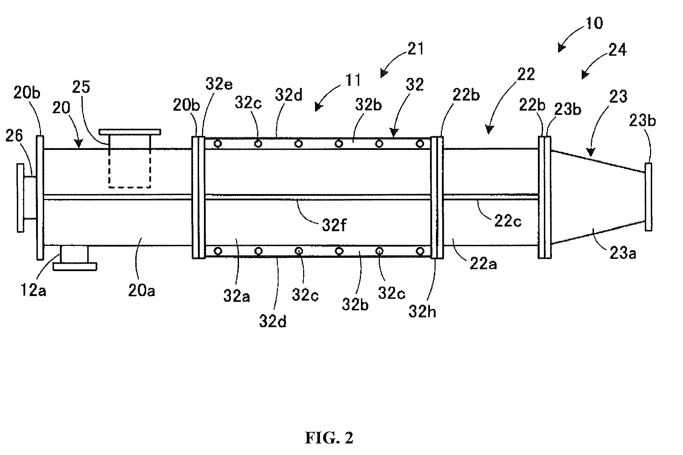

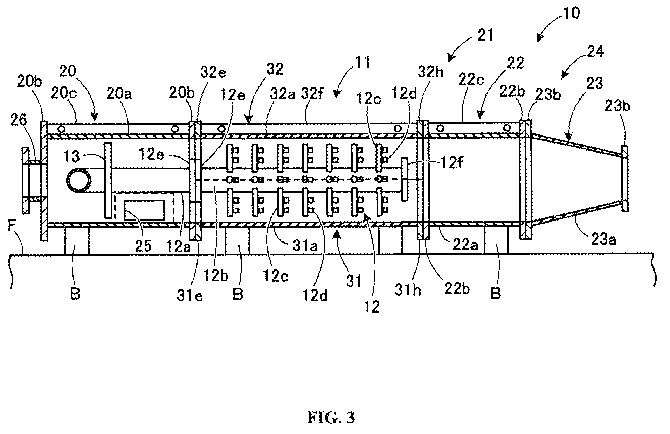

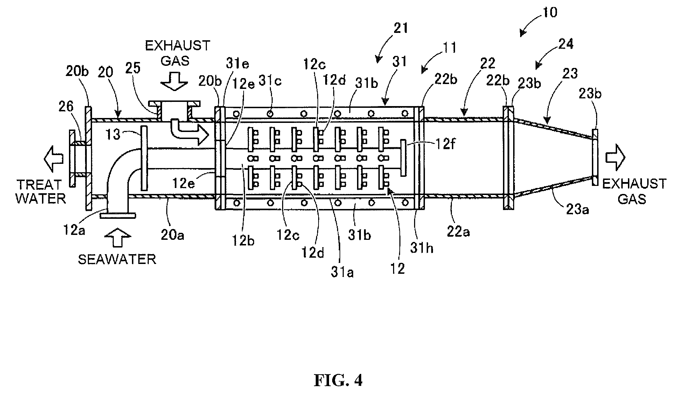

An embodiment of the present invention is now described hereinafter in detail with reference to the accompanying drawings. Figs. 1 to 4 each show an assembled gas absorption tower according to the present embodiment. Fig. 1 is a front view showing the exterior of the gas absorption tower. Fig. 2 is a plan view showing the exterior of the gas absorption tower. Fig. 3 is an explanatory diagram illustrating the internal structure of the gas absorption tower, showing a cross section of a partial configuration of Fig. 1. Fig. 4 is an explanatory diagram illustrating the internal structure of the gas absorption tower, showing a cross section of a partial configuration of Fig. 2. In the following description, the terms such as "upper," "lower," "left" and "right" are used mainly to describe Figs. 1 and 3 in which the gas absorption tower is laid on its side, unless otherwise specified. The term "front" means the upper part of Fig. 2 and the term "rear" the lower part of the same.

As shown in Figs. 1 to 4, the gas absorption tower 10 has an introducing portion (main body) 20 into which a gaseous matter and fluid are introduced from the outside, an absorbing portion 21 for performing gas absorption by bringing the gaseous matter and the fluid, which are supplied from the introducing portion (main body) 20, into contact with each other, and a discharge portion 24 for discharging the gaseous matter to the outside after the gas absorption. The absorbing portion 21 has a cylindrical piping component 11 formed of a cylindrical body having a central axis extending in a lateral direction, and a spray device 12 for spraying the fluid in a predetermined lateral region in an internal space of the cylindrical piping component 11. The introducing portion (main body) 20 has a baffle 13 located to the left of the internal space of the cylindrical piping component 11. The gas absorption tower 10 is laid on its side as shown in Figs. 1 and 3 and placed on a plurality of installation tables B placed on a floor surface F or the like. When installing the gas absorption tower 10 in a structure such as a vessel, the gas absorption tower 10, which is laid on its side, is moved upward with a crane or the like in such a manner as to draw an arc with the introducing portion 20 as the center, and is then positioned in such a manner that the central axis of the cylindrical piping component 11 extends in the vertical direction (that is, the gas absorption tower 10 is positioned upright). This upright gas absorption tower 10 is fixed to a side wall or the like of the structure by fixtures such as bolts.

The gas absorption tower 10 has, from left to right, the introducing portion (main body) 20, the absorbing portion 21, and the discharge portion 24 (configured with an outer cylinder 22 and a gas outlet cylinder 23) that are coupled together, forming the internal space into which exhaust gas is introduced.

The introducing portion (main body) 20 has a cylindrical body 20a, and flange portions 20b that are watertight-welded to the right and left ends of the body 20a. An exhaust gas inlet 25 is connected to the front region of the body 20a. The exhaust gas inlet 25 supplies exhaust gas to be treated from an engine, not shown, to the inside of the body 20a. The exhaust gas inlet 25 is provided in a way that the gas ejection direction extends along the tangential direction of the body 20a. A water pipe 12a of the spray device 12, described hereinafter, is watertight-welded to the rear region of the body 20a in a penetrating manner.

The left flange portion 20b configures the bottom of the cylindrical piping component 11 when the gas absorption tower 10 is installed in the structure. The left flange portion 20b is provided with a drain outlet 26 for draining the fluid to the outside of the cylindrical piping component 11. The inner opening diameter of the right flange portion 20b is equivalent to the diameter of the inner circumference of the body 20a. A second reinforcing plate 20c that extends in the central axis direction (the lateral direction) is welded to the outer upper surface of the body 20a to connect the left and right flange portions 20b.

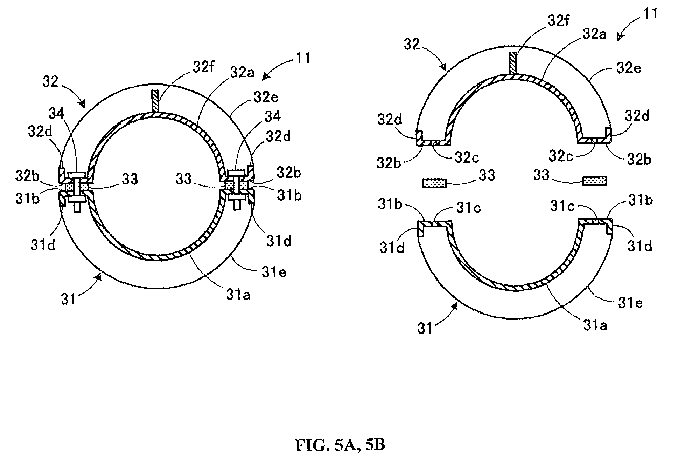

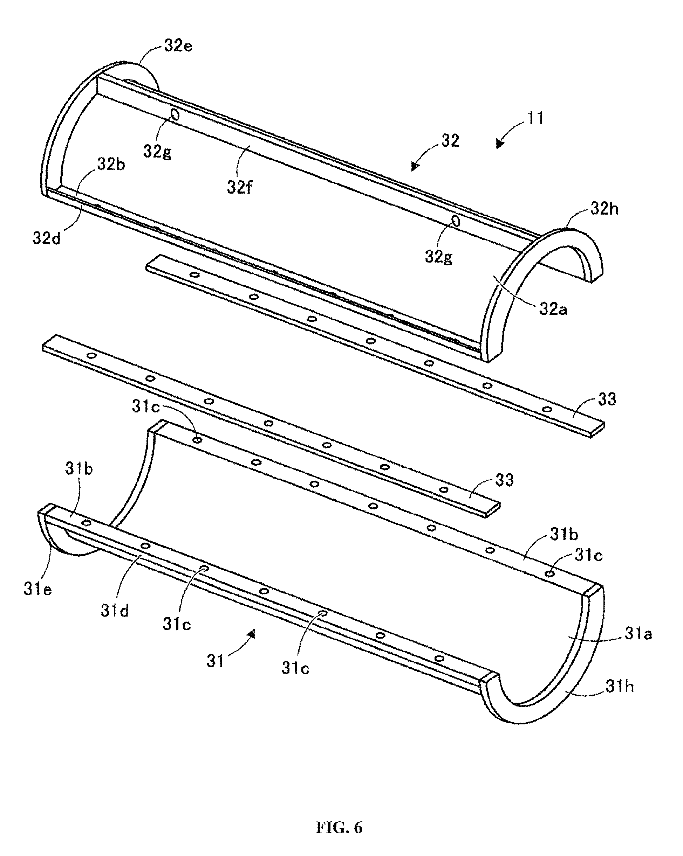

Fig. 5A is a cross-sectional diagram of the cylindrical piping component 11. Fig. 5B is an exploded view of Fig. 5A. Fig. 6 is a schematic exploded view of the cylindrical piping component 11. As shown in Figs. 3, 5A, 5B and 6, the cylindrical piping component 11 has a lower cylinder (the first molded element) 31 and an upper cylinder (the second molded element) 32 that form a cylinder when assembled. The lower cylinder 31 has a main portion 31a in a half-cylindrical shape, which is formed by cutting a cylindrical body along the central axis direction. Joint portions 31b, protruding outward, are formed respectively at both ends of the main portion 31a in the circumferential direction (the front-back direction) and extend in the central axis direction. The joint portions 31b are each in the form of a plate extending in the horizontal direction and have a plurality of holes 31c arranged in the lateral direction. The lower cylinder 31 also has bent portions 31d at the edges of the joint portions 31b, the bent portions 31d being formed by folding the respective edges of the joint portions 31b vertically downward. A third flange portion 31e and a fourth flange portion 31h are watertight-welded to the left and right ends of the main portion 31a, respectively, the third and fourth flange portions 31e and 31h forming a half-circle as viewed in the lateral direction. The third flange portion 31e on the left-hand side fixes the main body 20 and the absorbing portion 21 to each other. The fourth flange portion 31h on the right-hand side fixes the absorbing portion 21 and the discharge portion 24 to each other.

The upper cylinder 32 has the configuration in which the components of the lower cylinder 31 are inverted vertically. Therefore, for the configurations of the upper cylinder 32 which are the same as those of the lower cylinder 31, the same names are used, and the first digit of each reference numeral is changed from "1" to "2," thereby omitting the description of the identical configurations. In the upper cylinder 32, a first reinforcing plate 32f that extends from one end to the other end of the upper cylinder 32 in the central axis direction is welded to connect the first left flange portion 32e and the second right flange portion 32h. The vertical width of the first reinforcing plate 32f is greater than the front-back width of the same, so that a main portion 32a is not deformed in the vertical direction, enhancing the reinforcing effect. Holes (hoisting portions) 32g through which hoisting wires or the like are inserted are formed at two sections to the left and right of the first reinforcing plate 32f. The first reinforcing plate 32f is formed at a position to equally divide the outer circumferential surface of the upper cylinder 32 in the circumferential direction. Note that both ends of the first reinforcing plate 32f are welded to the first flange portion 32e and the second flange portion 32h respectively.

A sealing member 33 in the form of a sheet is sandwiched between each joint portion 31b of the lower cylinder 31 and each joint portion 32b of the upper cylinder 32. Each sealing member 33 is made of synthetic resin or the like so as to be attachable to the joint portions 31b, 32b, and keeps the adhesion therebetween on the inside and outside of the cylindrical piping component 11. Tightening members (fixing member) 34 such as bolts or nuts are mounted in the holes 31c, 32c of the joint portions 31b, 32b, respectively. The positions of the holes 31c of each joint portion 31b of the lower cylinder 31 correspond to the positions of the holes 32c of each joint portion 32b of the upper cylinder 32. Tightening the tightening members 34 can assemble the lower cylinder 31 and the upper cylinder 32 together, and, in this state, substantially a cylindrical inner circumferential surface is formed by the main portions 31a, 32a.

The outer cylinder 22 has a cylindrical main portion 22a and flange portions 22b that are watertight-welded to the left and right ends of the main portion 22a. A third reinforcing plate 22c that extends in the central axis direction is welded to the outer upper surface of the main portion 22a to connect the left and right flange portions 22b. As with the first reinforcing plate 32f of the absorbing portion 21, the front-back widths of the third reinforcing plate 22c of the outer cylinder 22 and the second reinforcing plate 20c of the introducing portion (main body) 20 are greater than the lateral widths of the same. The second reinforcing plate 20c of the introducing portion (main body) 20, the first reinforcing plate 32f of the upper cylinder 32, and the third reinforcing plate 22c of the outer cylinder 22 are arranged in a row along the central axis direction.

The gas outlet cylinder 23 has a tapering cylindrical main portion 23a and flange portions 23b watertight-welded to the left and right ends of the main portion 23a.

The spray device 12 is installed on the central axis of the cylindrical piping component 11 and sprays fluid in the internal space of the cylindrical piping component 11, the fluid being supplied from a sea water pump, not shown. The spray device 12 is configured with the water pipe 12a that extends to the right end of the main body 20 through the front region of the main body 20, a discharge pipe 12b that is coupled to the water pipe 12a and extends in the vertical direction in the internal space of the cylindrical piping component 11, a plurality of stages of branch pipes 12c coupled to the discharge pipe 12b, and a plurality of spray members 12d that are provided in the branch pipes 12c respectively.

Flange portions 12e are watertight-welded to the region where the water pipe 12a and the discharge pipe 12b are coupled to each other, establishing the connection between the water pipe 12a and the discharge pipe 12b through the flange portions 12e. A blank flange 12f is watertight-welded to the right end of the discharge pipe 12b to block the fluid flowing into the discharge pipe 12b. The spray direction of the spray members 12d is set to be perpendicular to each of the branch pipes 12c, so that the fluid can be sprayed evenly into the cylindrical piping component 11.

The baffle 13 is installed inside the main body 20 and supported by the water pipe 12a. The baffle 13 is in the shape of a disc, and a gap is formed between the outer circumferential edge of the baffle 13 and the body 20a to let liquid droplets flow. The baffle 13 divides the inside of the cylindrical piping component 11 into a region where the fluid is sprayed by the spray device 12 and a region where the fluid to be drained to the outside of the cylindrical piping component 11 is pooled.

In the present embodiment, although not shown, a drainage ring may be provided in such a manner as to protrude in the form of a ring from the inner circumferential surface of the outer cylinder 22 or the gas outlet cylinder 23 toward the central axis. Forming such a drainage ring can efficiently prevent the fluid, which flows to the right along the inner circumferential surface of the cylindrical piping component 11, from flowing out of the gas outlet cylinder 23. Furthermore, for the purpose of keeping adhesion, packing (not shown) is compressed in each of the sections coupling the flange portions 12e, 20b, 22b, 23b, 31e, 31h, 32e and 32h.

Next, exhaust gas treatment by the gas absorption tower 10 is described with reference to Fig. 4. When performing exhaust gas treatment, the central axis of the cylindrical piping component 11 is positioned in the vertical direction, with the gas outlet cylinder 23 being placed at the top. The exhaust gas that is discharged from the engine (not shown) flows through the exhaust gas inlet 25 and is introduced into the area below (the left in Fig. 4, when the cylindrical piping component 11 is installed) the region where the fluid is sprayed by the spray device 12, the area being located in the internal space of the introducing portion (main body) 20. The exhaust gas then flows upward in the cylindrical piping component 11 while swirling along the inner circumferential surface of the cylindrical piping component 11.

Seawater, on the other hand, is introduced to the discharge pipe 12b through the water pipe 12a. The seawater is then sprayed from the spray members 12d provided in the plurality of stages of branch pipes 12c toward the inner circumferential surfaces of the main portions 31a, 32a of the first outer wall 21.

Therefore, the exhaust gas that swirls upward in the cylindrical piping component 11 comes into contact with the seawater sprayed from the spray members 12d of the plurality of stages of branch pipes 12c, whereby sulfur dioxide is absorbed and removed from the exhaust gas. The exhaust gas with sulfur dioxide removed is discharged from the gas outlet cylinder 23 to the atmosphere.

The seawater in the form of droplets is pressed against the inner circumferential surface of the cylindrical piping component 11 by centrifugal force of the swirl flow of the gas and falls down by their own weight. The droplets that have fallen are stopped by the baffle 13 installed in the lower part of the cylindrical piping component 11 from swirling, and pool in a pooling portion through the baffle 13 and the body 20a of the main body 20, the pooling portion being configured with the lower (the left in Fig. 4, when the cylindrical piping component 11 is installed) flange portion 20b and the body 20a around the flange portion 20b. The pooled fluid, treatment water, is drained to the outside of the absorption tower main body 11 through the drain outlet 26.

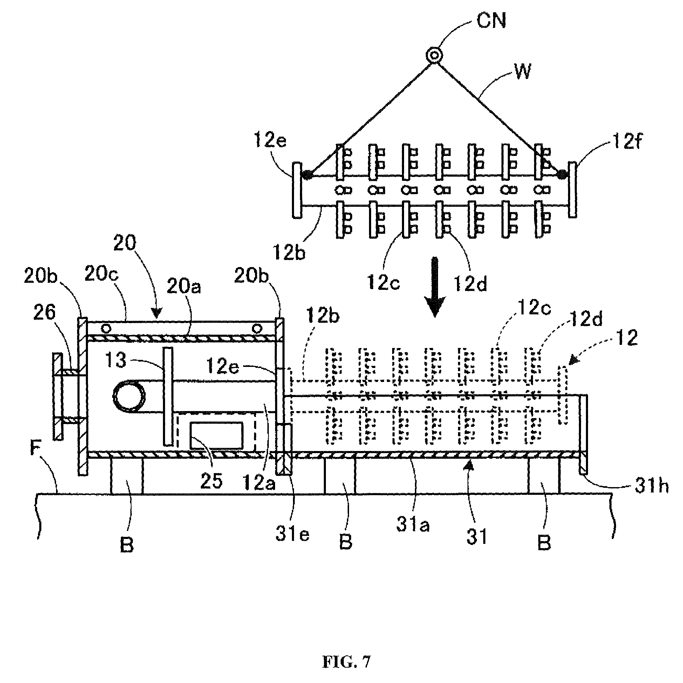

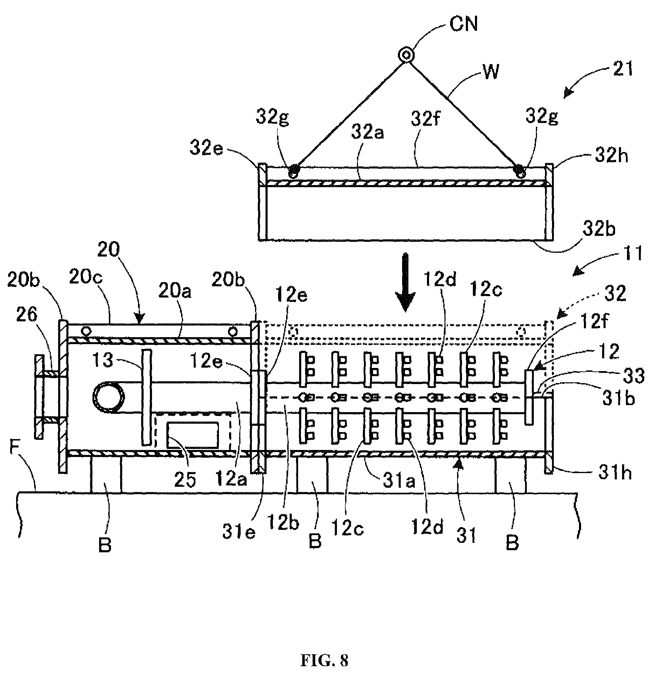

Next, an assembling operation for the absorbing portion 21 and its surrounding structure is described with reference to Figs. 7 and 8. Fig. 7 is an explanatory diagram illustrating the gist of how to assemble the discharge pipe 12b. Fig. 8 is an explanatory diagram illustrating the gist of how to assemble the upper cylinder 32.

Suppose that, as shown in Fig. 7, the main body 20 to which the water pipe 12a is welded is placed on an installation table B prior to an assembly operation for the absorbing portion 21. First, the lower cylinder 31 is coupled and fixed to the main body 20. In so doing, first, packing (not shown) is attached to the right flange portion 20b of the main body 20. Next, at the right-hand side of the main body 20, the lower cylinder 31 is placed on the installation table B and the flange portion 31e of the lower cylinder 31 is positioned to face the flange portion 20b of the main body 20. Subsequently, the lower cylinder 31 is brought close to the main body 20, packing is compressed between the flange portions 20b, 31e, and the flange portions 20b and 31e are compressed to each other by a tightening member (not shown), thereby coupling and fixing the lower cylinder 31 to the main body 20.

Next, the discharge pipe 12b is coupled and fixed to the water pipe 12a of the spray device 12. In so doing, first, packing (not shown) is attached to the flange portion 12e of the water pipe 12a. Next, wires W are attached to two places on the discharge pipe 12b, and then the discharge pipe 12b is hoisted with the crane CN using the wires W. Subsequently, the crane CN is driven to move the discharge pipe 12b, causing the flange portion 12e of the discharge pipe 12b to face the flange portion 12e of the water pipe 12a. Thereafter, the discharge pipe 12b is brought close to the water pipe 12a, packing is compressed between the flange portions 12e, 12e, and the flange portions 12e, 12e are compressed to each other by a tightening member (not shown), thereby coupling the discharge pipe 12b to the water pipe 12a. As a result of coupling these pipes, the discharge pipe 12b of the spray device 12 is fixed to the inside of the lower cylinder 31.

Next, the upper cylinder 32 is disposed and coupled to the main body 20 and the lower cylinder 31. In so doing, first, the sealing members 33 are placed on the joint portions 31b of the lower cylinder 31 (see Fig. 6). Next, as shown in Fig. 8, a wire W is attached to each of the holes 32g of the first reinforcing plate 32f, and then the upper cylinder 32 is hoisted with the crane CN using the wires W. Subsequently, the crane CN is driven to move the upper cylinder 32 and dispose the upper cylinder 32 on the lower cylinder 31 so as to cover the discharge pipe 12b. The joint portions 32b of the upper cylinder 32 are placed on the sealing members 33 placed on the joint portions 31b of the lower cylinder 31, and the first flange portion 32e of the upper cylinder 32 is placed to face the flange portion 20b of the main body 20. Thereafter, the upper cylinder 32 is brought close to the main body 20, packing is compressed between the flange portion 20b and the first flange portion 32e, and the flange portion 20b and the first flange portion 32e are compressed to each other by a tightening member (not shown). In addition, the tightening members 34 are mounted into the holes 31c, 32c of the joint portions 31b, 32b, and the tightening members 34 are tightened, thereby assembling the lower cylinder 31 and the upper cylinder 32.

As described above, in the gas absorption tower 10 according to the present embodiment, the assembly operation is performed in such a manner that the lower cylinder 31, the discharge pipe 12b, and the upper cylinder 32 are installed from bottom to top in this order. Consequently, the conventional assembly operation of passing the discharge pipe through the cylinder can be eliminated. Even when the gap between the inner surface of the first outer cylinder 21 and the edges of the branch pipes 12c can be narrowed consequently, damage that can occur due to contact therebetween can be avoided in the assembly operation. Moreover, being able to prevent such damage can increase the speed at which each member is moved by the crane CN at the time of assembly, thus speeding up the assembly work. In assembly of the absorbing portion 21 of the present embodiment, even when the lengths of the absorbing portion 21 and the discharge pipe 12b and the space between the inner surface of the absorbing portion 21 and the edges of the branch pipes 12c are changed, the length of time it takes in the assembly operation does not change. Consequently, it becomes easier to adopt the design for increasing the amount of exhaust gas to be treated, improving the degrees of freedom in design of the gas absorption tower.

The first reinforcing plate 32f that is provided on the upper cylinder 32 of the absorbing portion 21 can prevent the middle part of the upper cylinder 32 in the lateral direction from bulging, collapsing, or deforming in any way, even when the upper cylinder 32 is lifted up as shown in Fig. 8. Furthermore, because the second reinforcing plate 20c and the third reinforcing plate 22c are provided on the main body 20 and the outer cylinder 22, the thicknesses of the bodies 20a, 22a, the main portions 32a and the like can be reduced, resulting in a reduction in the cost of materials. In addition, the second reinforcing plate 20c, the first reinforcing plate 32f, and the third reinforcing plate 22c are arranged in a row along the central axis direction. Therefore, when the gas absorption tower 10, which is laid on its side at the time of manufacture, is moved upward in such a manner as to draw an arc with the introducing portion 20 as the center, and is then positioned upright in order to install the gas absorption tower 10 in a vessel or the like, the second reinforcing plate 20c, the first reinforcing plate 32f, and the third reinforcing plate 22c that are arranged in a row along the central axis direction can counter the stress acting on the gas absorption tower 10 (the stress acting on the upper side of the gas absorption tower 10 in Fig. 1). Consequently, the operation of positioning the laid gas absorption tower 10 upright can be supported by the first to third reinforcing plates 20c, 32f, 22c. In other words, the operation of positioning the laid gas absorption tower 10 upright and installing it in a vessel or the like can be performed easily.

In addition, compressing the sealing members 33 between the joint portions 31b, 32b of the lower cylinder 31 and the upper cylinder 32 can prevent the treatment water and the like from leaking out of the cylindrical piping component 11. Moreover, by forming the bent portions 31d, 32d at the edges of the joint portions 31b, 32b, the joint portions 31b, 32b can be prevented from deforming and kept flat, favorably demonstrating the adhesion of the sealing members 33.

According to the present embodiment, when assembling the cylindrical piping component 11, the spray device 12 can be installed on the lower cylinder (first molded element) 31 that is laid on its side, and then the upper cylinder (second molded element) 32 can be installed on the lower cylinder 31 so as to cover the spray device 12. Thus, the conventional operation of inserting the spray device into the cylinder can be eliminated, preventing damage that can occur due to contact between spray device 12 and the inner circumferential surface of the cylindrical piping component 11. Even when assembling the cylindrical piping component 11 with a crane, the burden of the operation can be reduced more than the conventional method, preventing a decrease in work efficiency. Even when the length of the cylindrical piping component 11 is increased or the clearance between the cylindrical piping component 11 and the spray device 12 is narrowed, the impacts of such changes do not affect the assembly operation, lowering the risk that the spray device 12 comes into contact with the cylindrical piping component 11 at the time of assembly. Therefore, even when the amount of exhaust gas to be treated needs to be increased, the efficiency of the assembly operation does not drop, and a configuration that meets such a need can easily be employed.

The sealing members 33 are compressed at the joint portions 31b, 32b of the lower cylinder 31 and the upper cylinder 32 to ensure the adhesion therebetween on the inside and outside of the cylindrical piping component 11, preventing the fluid from flowing out from between the lower cylinder 31 and the upper cylinder 32.

Furthermore, the lower cylinder 31 and the upper cylinder 32 are configured by forming the bent portions 31d, 32d at the edges of the joint portions 31b, 32b. Therefore, such a simple configuration can prevent deformation of the joint portions 31b, 32b and keep the adhesion between the sealing members 33 and the joint portions 31b, 32b.

The present invention is not limited to the foregoing embodiment and can be modified in various ways. The sizes and shapes of the parts described in the foregoing embodiment are not limited to those shown in the accompanying drawings and can be changed appropriately within the scope where the effects of the present invention can be demonstrated. In addition, the foregoing embodiment can be modified appropriately and implemented without departing from the scope of the object of the present invention.

For instance, in the foregoing embodiment, the reinforcing plate 32f is provided only on the upper cylinder 32 of the absorbing portion 21, but the reinforcing plate may be provided only on the main portion 31a of the lower cylinder 31 instead of the upper cylinder 32. The reinforcing plate may also be provided on both the upper cylinder 32 and the lower cylinder 31. In addition, the reinforcing plate may be provided on both the upper side and the lower side of the gas absorption tower 10. Specifically, the first reinforcing plate 32f is provided on the upper cylinder 32, the second reinforcing plate 20c on the main body 20, the third reinforcing plate 22c on the outer cylinder 22, and then the second reinforcing plate 20c, the first reinforcing plate 32f and the third reinforcing plate 22c are arranged in a row along the central axis direction. Moreover, a fourth reinforcing plate is provided at a position to equally divide the outer circumferential surface of the lower cylinder 31 in the circumferential direction, a fifth reinforcing plate on the lower side of the main body 20, and a sixth reinforcing plate on the lower side of the outer cylinder 22, in which the fifth reinforcing plate, the fourth reinforcing plate, and the sixth reinforcing plate are arranged in a row along the central axis direction. Therefore, when the gas absorption tower 10, which is laid on its side at the time of manufacture, is positioned upright and installed in a structure such as a vessel, the upright position of the gas absorption tower 10 can be supported by the first to third reinforcing plates 20c, 32f, 22c and the fourth to sixth reinforcing plates. The first to third reinforcing plates 20c, 32f, 22c and the fourth to sixth reinforcing plates can prevent the lower cylinder 31 and the upper cylinder 32 from deforming when hoisted, and providing these reinforcing plates can prevent an increase in the cost of materials for the parts. The number of reinforcing plates 20c, 22c, 32f to be installed may be increased as long as the entire material cost does not rise.

In the present embodiment, the cylindrical piping component 11 is in the shape of a cylinder; however, the shape of the cylindrical piping component 11 is not limited thereto and can be in the shape of a square tube.

The present application is based on Japanese Patent Application No. 2013-216325 filed on October 17, 2013, the entire contents of which are hereby incorporated by reference.

## Claims

1. A gas absorption tower for performing gas absorption by bringing a gaseous matter and fluid into contact with each other, the gas absorption tower comprising:
an introducing portion into which the gaseous matter and the fluid are introduced from the outside;
an absorbing portion for performing gas absorption by bringing the gaseous matter and the fluid, which are supplied from the introducing portion, into contact with each other; and
a discharge portion for discharging the gaseous matter, subjected to the gas absorption, to the outside,
wherein the absorbing portion has a cylindrical piping component in which is formed an internal space to which the gaseous matter is supplied from the introducing portion, and a spray device for spraying the fluid to the gaseous matter in the internal space,
the cylindrical piping component being divided into a plurality of parts in a central axis direction thereof.

2. The gas absorption tower according to claim 1, wherein
the cylindrical piping component has first and second molded elements that configure a cylinder when assembled, and
the first and second molded elements are each formed to have a shape obtained by cutting a cylindrical body along a central axis direction thereof.

3. The gas absorption tower according to claim 2, wherein an outer circumferential surface of at least either the first molded element or the second molded element is provided with a first reinforcing plate that extends from one end to the other end of the outer circumferential surface in the central axis direction.

4. The gas absorption tower according to claim 3, wherein the first reinforcing plate has a hoisting portion.

5. The gas absorption tower according to claim 3 or 4, wherein a vertical width of the first reinforcing plate is greater than a front-back width of the same.

6. The gas absorption tower according to any one of claims 3 to 5, wherein
a first flange is formed at one end of each of the first and second molded elements in the central axis direction to fix the introducing portion and the absorbing portion to each other,
a second flange is formed at the other end of each of the first and second molded elements in the central axis direction to fix the absorbing portion and the discharge portion to each other, and
both ends of the first reinforcing plate are welded to the first and second flanges.

7. The gas absorption tower according to any one of claims 3 to 6, wherein the first reinforcing plate is formed at a position to equally divide the outer circumferential surface in a circumferential direction.

8. The gas absorption tower according to any one of claims 3 to 7, wherein
a second reinforcing plate extending in the central axis direction is provided on an outer circumferential surface of the introducing portion,
a third reinforcing plate extending in the central axis direction is provided on an outer circumferential surface of the discharge portion, and
the first reinforcing plate, the second reinforcing plate, and the third reinforcing plate are arranged in a row along the central axis direction.

9. The gas absorption tower according to claim 2, wherein
a fourth reinforcing plate is provided on an outer circumferential surface of the first molded element so as to extend from one end to the other end of the outer circumferential surface in the central axis direction,
the first reinforcing plate is provided on an outer circumferential surface of the second molded element,
a second reinforcing plate and a fifth reinforcing plate that extend in the central axis direction are provided on an outer circumferential surface of the introducing portion,
a third reinforcing plate and a sixth reinforcing plate that extend in the central axis direction are provided on an outer circumferential surface of the discharge portion,
the first reinforcing plate, the second reinforcing plate, and the third reinforcing plate are arranged in a row along the central axis direction, and
the fourth reinforcing plate, the fifth reinforcing plate, and the sixth reinforcing plate are arranged in a row along the central axis direction.

10. The gas absorption tower according to any one of claims 2 to 9, wherein the first and second molded elements each have, at both ends thereof in the circumferential direction, joint portions extend in the central axis direction.

11. The gas absorption tower according to claim 10, wherein a sealing member is sandwiched between each of the joint portions of the first molded element and each of the joint portions of the second molded element.

12. The gas absorption tower according to claim 10 or 11, wherein each of the joint portions of the first and second molded elements has a bent portion at an edge thereof.

13. The gas absorption tower according to any one of claims 10 to 12, wherein
the first and second molded elements each have, in a plane of each of the joint portions, a plurality of holes arranged along the central axis direction,
the positions of the holes of the first molded element correspond to the positions of the holes of the second molded element, and
the cylindrical piping component is assembled by tightening the corresponding holes of the first molded element and the second molded element to each other with fixing members.

14. A method for manufacturing a gas absorption tower for performing gas absorption by bringing a gaseous matter and fluid into contact with each other, the method comprising the steps of:
fixing a first molded element of a cylindrical piping component to a main body, the cylindrical piping component having the first molded element and a second molded element which are each formed to have a shape obtained by cutting a cylindrical body along a central axis direction thereof and which configure an internal space into which the gaseous matter is introduced;
fixing a spray device, which sprays the fluid in the internal space, to the main body so as to be positioned inside the first molded element; and
disposing the second molded element above the first molded element so as to cover the spray device and fixing the second molded element to the main body and the first molded element.

15. A vessel, in which the gas absorption tower of claim 8 or 9 is laid on its side, is moved upward in such a manner as to draw an arc with the introducing portion as the center, and is then positioned upright.
